# EUROPÄISCHE PATENTSCHRIFT

(11) **EP 3 447 451 B1**
(45) Veröffentlichungstag und Bekanntmachung des Hinweises auf die Patenterteilung: **29.01.2020**
(21) Anmeldenummer: 18189901.4
(22) Anmeldetag: 21.08.2018
(51) Int. Cl.: G01D 11/16, F16K 37/00

(54) **ADAPTER ZUR ANORDNUNG EINER WEGMESSVORRICHTUNG AN EINEM SCHWENKANTRIEB**
ADAPTER FOR ASSEMBLY OF A DISPLACEMENT MEASURING APPARATUS ON A PIVOT DRIVE
ADAPTATEUR DE MISE EN PLACE D'UN DISPOSITIF DE MESURE DE DÉPLACEMENT SUR UN ENTRAÎNEMENT PIVOTANT

(30) Priorität: 22.08.2017 DE 102017119159
(43) Veröffentlichungstag der Anmeldung: 27.02.2019
(73) Patentinhaber: GEMÜ Gebr. Müller Apparatebau GmbH & Co. Kommanditgesellschaft, 74653 Ingelfingen (DE)
(72) Erfinder: Flögel, Werner, 74677 Dörzbach (DE); Höfs, Daniel, 74653 Künzelsau (DE); Zeiser, Manfred, 74653 Ingelfingen-Criesbach (DE)
(74) Vertreter: DREISS Patentanwälte PartG mbB

(56) Entgegenhaltungen:
- EP-A2- 0 325 787
- DE-A1-102012 202 634
- DE-A1-102012 202 662
- DE-U1-202013 104 188

## Beschreibung

Die Erfindung betrifft einen Adapter zur Anordnung einer Wegmessvorrichtung an einem Schwenkantrieb einer Armatur.

Schwenkantriebe für Armaturen umfassend beispielsweise Kugelhähne oder Absperrklappen sind bekannt. Des Weiteren ist bekannt, dass an einem Schwenkantrieb ein Drehsensor zur Ermittlung einer Drehposition des Schwenkantriebs angeordnet wird, siehe z.B. DE 20 2013 104188 U1.

Des Weiteren sind Wegmessvorrichtungen bekannt, die einen Hub einer Hubstange messen und einen entsprechenden Sensorwert ermitteln, welcher der Position der Hubstange entspricht. Weiter sind Anordnungen zur Umwandlung einer Drehung einer Mehrfachdrehungswelle in eine lineare Bewegung bekannt, siehe z.B. EP 0 325 787 A2, DE 10 2012 202634 A1 und DE 10 2012 202662 A1.

Das der Erfindung zugrunde liegende Problem wird durch einen Adapter zur Anordnung einer Wegmessvorrichtung an einem Schwenkantrieb für eine Armatur nach dem Anspruch 1 gelöst. Vorteilhafte Weiterbildungen sind in den abhängigen Ansprüchen angegeben und finden sich ferner in der nachfolgenden Beschreibung von Ausführungsbeispielen der Zeichnung.

Es wird ein Adapter zur Anordnung einer Wegmessvorrichtung an einem Schwenkantrieb einer Armatur vorgeschlagen, welcher umfasst: Ein um eine Rotationsachse drehbares erstes Adapterelement mit einem ersten Anschluss für eine Welle des Schwenkantriebs und mit einer Steuerkurve, welche zwei in voneinander beabstandeten Lotebenen der Rotationsachse liegende gedachte Punkte miteinander verbindet; ein feststehendes zweites Adapterelement mit einem Führungsabschnitt für ein drittes Adapterelement; und das dritte Adapterelement mit einem Kontaktabschnitt, welcher die Steuerkurve kontaktiert, mit einem weiteren Führungsabschnitt, welcher gemeinsam mit dem Führungsabschnitt des zweiten Adapterelements eine Bewegung des dritten Adapterelements auf eine Bewegung entlang der Rotationsachse beschränkt, und mit einem zweiten Anschluss für eine Hubstange der Wegmessvorrichtung.

Damit wird vorteilhaft ermöglicht, dass Wegmessvorrichtungen auch mit Schwenkantrieben gekoppelt werden können. Das Einsatzgebiet der Wegmessvorrichtung wird mittels des vorgeschlagenen Adapters auf Schwenkantriebe erweitert. Durch den vorgeschlagenen Adapter muss kein Drehgeber vorgesehen werden, um die Drehposition des Schwenkantriebs zu ermitteln. Vielmehr kann auf vorhandene Wegmessvorrichtungen, welche den Hub einer Hubstange ermitteln, zurückgegriffen werden. Auch ergeben sich konstruktive Vorteile, da vorhandene Wegmessvorrichtungen und Schwenkantriebe nicht oder nur wenig verändert werden müssen. Vorteilhaft müssen folgich keine separaten Drehwinkelgeber entwickelt und vom Hersteller vorgehalten werden. Auf Kundenseite ergibt sich der Vorteil, dass die Variantenvielfalt hinsichtlich der Sensorik beschränkt bleibt.

Eine vorteilhafte Ausführungsform zeichnet sich dadurch aus, dass das dritte Adapterelement zumindest einen distalen Anzeigeabschnitt aufweist, welcher von außerhalb des Adapters einsehbar ist. Das dritte Adapterelement stellt somit vorteilhaft eine Stellungsanzeige für den Absperrkörper der Armatur bereit.

Eine vorteilhafte Ausführungsform zeichnet sich dadurch aus, dass der erste Anschluss, die Führungsabschnitte und die Steuerkurve derart aufeinander abgestimmt sind, sodass das dritte Adapterelement in einer geöffneten Position der Armatur in einer von dem Schwenkantrieb weg orientierten Position angeordnet ist und sodass das dritte Adapterelement in einer geschlossenen Position der Armatur in einer zum Antrieb hin orientierten Position angeordnet ist. Damit wird eine von einem Bedien- und Wartungspersonal intuitiv erkennbare Stellungsanzeige geschaffen.

Eine vorteilhafte Ausführungsform zeichnet sich dadurch aus, dass die Steuerkurve einer gedachten Kurve durch eine Mantelfläche eines Kreiszylinders folgt, wobei eine Rotationsachse des Kreiszylinders mit der Rotationsachse des ersten Adapterelements zusammenfällt. Damit wird vorteilhaft ein kompakter Adapter bereitgestellt.

Eine vorteilhafte Ausführungsform zeichnet sich dadurch aus, dass das erste Adapterelement zwei Steuerkurven umfasst, welche eine Rotationssymmetrie zu der Rotationsachse aufweisen, und wobei das dritte Adapterelement zwei zu den Steuerkurven korrespondierende Kontaktabschnitte umfasst, welche jeweils eine der Steuerkurven kontaktieren. Vorteilhaft wird durch die zwei Steuerkurven eine Zweipunktauflage für das dritte Adapterelement geschaffen. Damit wird eine Blockierung des Adapters vorgebeugt. Darüber hinaus wird eine Fehlmontage des Adapters verhindert. Insgesamt wird also die Funktionssicherheit vorteilhaft erhöht.

Eine vorteilhafte Ausführungsform zeichnet sich dadurch aus, dass die Steuerkurve eine über einen Winkelbereich von einer geschlossenen Position hin zu einer geöffneten Position der Armatur gleichbleibende Steigung aufweist. Folglich wird ein Drehwinkelbereich des ersten Anschlusses linear auf einen Hubbereich des zweiten Anschlusses übertragen.

Eine vorteilhafte Ausführungsform zeichnet sich dadurch aus, dass die Steuerkurve zumindest zwei Steuerabschnitte mit unterschiedlicher Steigung umfasst. Damit ist es möglich, in einem der Steuerabschnitte eine gewünschte erhöhte Auflösung des Signals der Wegmessvorrichtung zu erreichen. Durch diesen Freiheitsgrad ist es ferner vorteilhaft möglich, eine Abstimmung einer Kennlinie der Armatur, der Steuerkurve und der Steuer- bzw. Regelfunktion durchzuführen.

Eine vorteilhafte Weiterbildung zeichnet sich dadurch aus, dass die Steuerkurve hin zu einer Schließposition der Armatur einen zweiten Steuerabschnitt mit einer Steigung aufweist, welche geringer ist als die Steigung in dem ersten Steuerabschnitt. Damit hat eine Regelfunktion Zugriff auf höher aufgelöstes Signal der Wegmessvorrichtung.

Ein weiterer Aspekt betrifft eine Armatur umfassend den vorgeschlagenen Adapter, den Schwenkantrieb und die Wegmessvorrichtung, wobei der Adapter zwischen der Welle des Schwenkantriebs und der Hubstange der Wegmessvorrichtung angeordnet ist.

Weitere Vorteile und Merkmale der Erfindung finden sich in der nachfolgenden Beschreibung von Ausführungsbeispielen der Zeichnung. In der Zeichnung zeigen:
Figur 1 einen Adapter in schematischer Ansicht;
Figur 2 den Adapter in einer schematischen Seitenansicht;
Figuren 3 und 4 jeweils einen Schwenkantrieb, den Adapter und eine Wegmessvorrichtung in einer Explosionsansicht;
Figur 5 ein erstes Adapterelement in perspektivischer Ansicht;
Figur 6 verschiedene Ausführungsformen einer Steuerkurve in schematischer Ansicht;
Figur 7 eine weitere schematische Seitenansicht des Adapters;
Figuren 8 und 10 jeweils einen schematischen Schnitt des Adapters; und
Figur 9 eine schematische Draufsicht auf den Adapter;
Figuren 11 und 12 jeweils eine perspektivische Ansicht eines dritten Adapterelements.

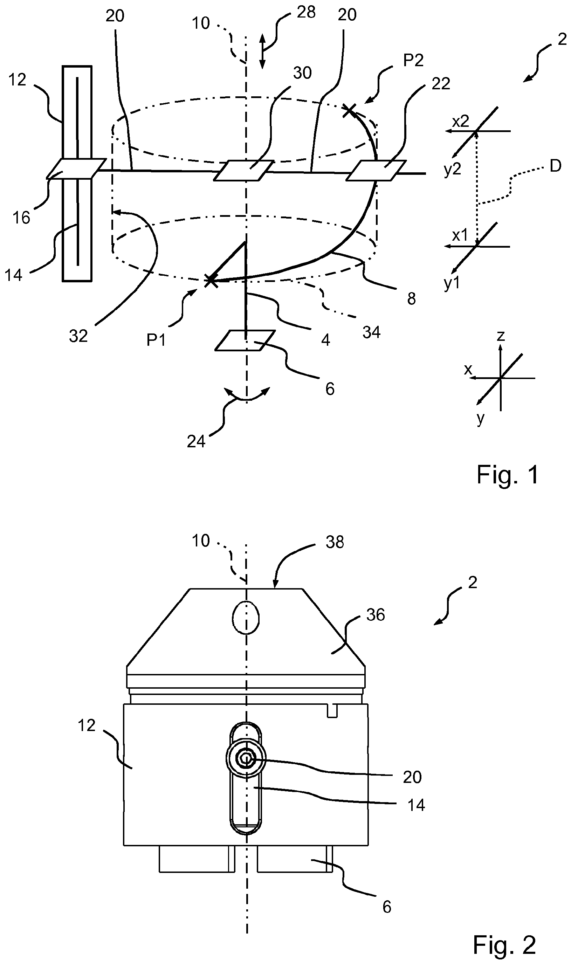

Figur 1 zeigt einen Adapter 2 in schematischer Ansicht. Der Adapter 2 umfasst ein erstes Adapterelement 4 mit einem ersten Anschluss 6 für eine Welle eines Schwenkantriebs und mit einer Rampe. Die Rampe verbindet über eine Steuerkurve 8 zwei gedachte Punkte P1 und P2, wobei die Punkte P1 und P2 in einer jeweiligen Lotebene x1-y1 und x2-y2 einer Rotationsachse 10 liegen. Die Lotebenen x1-y1 und x2-y2 verlaufen lotrecht zur Rotationsachse 10 und sind durch eine Distanz D voneinander beabstandet. Die Rotationsachse 10 verläuft durch den Anschluss 6 des ersten Adapterelements 4.

Ein zweites Adapterelement 12 umfasst einen Führungsabschnitt 14, welcher parallel zur Rotationsachse 10 verläuft. Der Führungsabschnitt 14 wirkt mit einem weiteren Führungsabschnitt 16 eines dritten Adapterelements 20 derart zusammen, sodass eine Bewegung des dritten Adapterelements 20 auf eine Bewegung entlang der Rotationsachse 10 begrenzt ist. Folglich bewegt sich das dritte Adapterelement 20 in einer xz-Ebene, welche durch die Rotationsachse 10 verläuft. Das dritte Adapterelement 20 ist steg-förmig ausgebildet, wobei eine Längsachse des dritten Adapterelements 20 lotrecht zur Rotationsachse 10 und durch die Rotationsachse 10 verläuft.

Das dritte Adapterelement 20 umfasst einen Kontaktabschnitt 22, welcher die Steuerkurve 8 kontaktiert. Ist die Welle des Schwenkantriebs mit dem ersten Anschluss drehfest verbunden, so wird bei einer Drehbewegung des ersten Adapterelements 4 gemäß einem Doppelpfeil 24 um die Rotationsachse 10 die Steuerkurve 8 um die Rotationsachse 10 gedreht. Durch die Kontaktierung des Kontaktabschnitts 22 mit der Steuerkurve 8 und die Einschränkung der Bewegung des dritten Adapterelements 20 entlang der Rotationsachse 10 bewirkt eine Rotation des ersten Adapterelements 4 eine translatorische Bewegung des dritten Adapterelements 20 gemäß dem Doppelpfeil 28 entlang der Rotationsachse 10. Die Rotationsachse 10 verläuft durch einen zweiten Anschluss 30 des dritten Adapterelements 20. Der zweite Anschluss 30 ist zum Anschluss einer Hubstange einer Wegmessvorrichtung vorgesehen. Folglich führt eine Rotation des ersten Anschlusses 6 um die Rotationsachse 10 zu einer translatorischen Bewegung des zweiten Anschlusses 30 entlang der Rotationsachse 10. Die Steuerkurve 8 folgt einer gedachten Mantelfläche 32 eines gedachten Kreiszylinders 34, dessen Rotationsachse mit der Rotationsachse 10 zusammenfällt.

Figur 2 zeigt den Adapter 2 in einer schematischen Seitenansicht. Das feststehende zweite Adapterelement 12 ist als Gehäuse ausgebildet, in welchem zumindest ein Langloch, welches den Führungsabschnitt 14 für das dritte Adapterelement 20 darstellt, parallel zur Rotationsachse 10 verläuft. Des Weiteren ist der erste Anschluss 6, welcher entgegen der z-Richtung von dem Adapter abragt, gezeigt. In z-Richtung schließt sich an das zweite Adapterelement 12 ein Deckel 36 an. Der Deckel 36 umfasst einen Anschlussbereich 38, an dem die Wegmessvorrichtung 50 drehfest anordenbar ist.

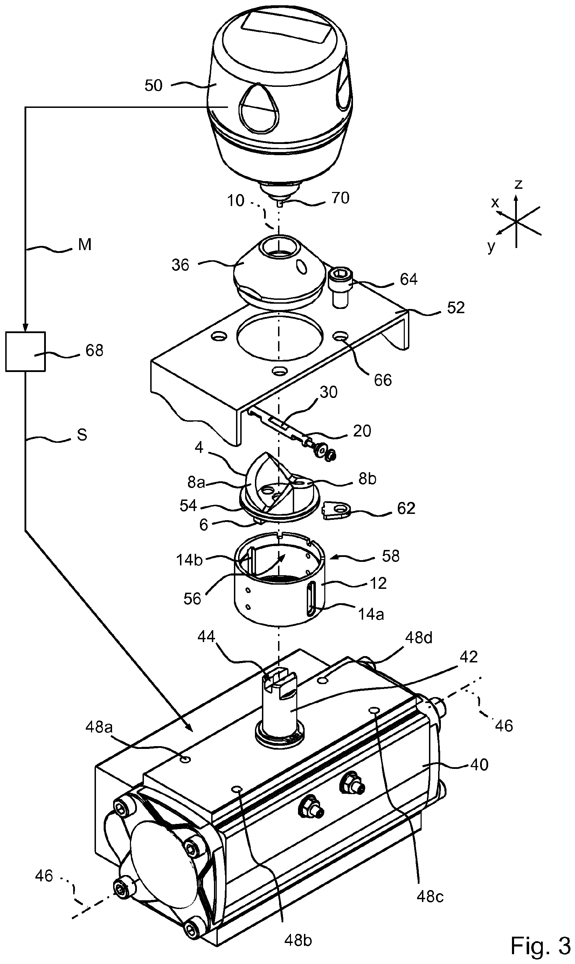

Figur 3 zeigt den Schwenkantrieb 40, den Adapter 2 und eine Wegmessvorrichtung 50 in einer Explosionsansicht. Die Welle 42 des Schwenkantriebs 40 umfasst eine Nut 44, welche in der gezeigten Position entlang einer Längsachse 46 des Schwenkantriebs 40 verläuft. Die gezeigte Position der Welle 42 entspricht einer geöffneten Position der zugeordneten Armatur, was bedeutet, dass ein Fluid-Kanal geöffnet ist. In die Nut 44 greift der korrespondierende erste Anschluss 6 des ersten Adapterelements 4 ein. Selbstverständlich sind auch andere Kodierungen einer Funktion der Armatur zu der Nut 44 bzw. zu dem Adapterelement 4 denkbar.

Der Schwenkantrieb 40 umfasst an seiner Oberfläche vier Gewindebohrungen 48a bis 48d. Ein Winkelelement 52 umfasst zu den vier Bohrungen 48a bis 48d korrespondierende nicht gezeigte Durchgangsbohrungen. Nicht gezeigte Schrauben werden durch die Durchgangsbohrungen des Winkelelements 52 in die Bohrungen 48a bis 48d eingeschraubt, um das Winkelelement 52 zu dem Schwenkantrieb 40 festzulegen. Das zweite Adapterelement 12 wird zwischen dem Schwenkantrieb 40 und dem Winkelelement 52 entlang der z-Achse formschlüssig festgelegt.

Das erste Adapterelement 4 umfasst einen radial äußeren Anlageabschnitt 54 zur Anlage an einer zylinder-förmigen Innenwand 56 des zweiten Adapterelements 12. Der Anlageabschnitt 54 und die Innenwand 56 erlauben eine Rotationsbewegung des ersten Adapterelements 4 gegenüber dem zweiten Adapterelement 12. Wird also das zweite Adapterelement 12 über die Welle 42 geführt und das erste Adapterelement 4 in das zweite Adapterelement 12 geführt und in Formschluss mit der Welle 42 gebracht, so ist das zweite Adapterelement 12 derart festgelegt, sodass nur noch ein Freiheitsgrad zur Verdrehung um die Rotationsachse 10 besteht.

Das zweite Adapterelement 12 umfasst zumindest eine distale und radial verlaufende Nut 58. In die Nut 58 greift eine Verdrehsicherung 62 ein, welche mittels einer Schraube 64, die durch eine Durchgangsöffnung 66 geführt ist, zu dem Winkelelement 52 festgelegt ist. Damit ist das zweite Adapterelement 12 und insbesondere Führungsabschnitte 14a, 14b zu dem Schwenkantrieb 40 festgelegt.

Die zwei sich gegenüberliegenden Führungsabschnitte 14a, 14b sind jeweils als Langloch ausgebildet. In die Führungsabschnitte 14a, 14b wird das dritte Adapterelement 20 im Sinne eines Gleitsteins eingebracht. Das dritte Adapterelement 20 läuft auf den beiden Steuerkurven 8a und 8b und ist damit entlang der Rotationsachse 10 verschieblich. Der mittig angeordnete zweite Anschluss 30 bewegt sich bei einer Rotation des ersten Anschlusses 6 entlang der Rotationsachse 10.

Eine Hubstange 70 der Wegmessvorrichtung 50 wird mittels des zweiten Anschlusses 30 entlang der Rotationsachse 10 bewegt. Hierzu ist die Hubstange 70 beispielsweise gestuft ausgebildet und greift in eine nicht gezeigte Öffnung des zweiten Anschlusses 30 ein. In einer anderen, nicht gezeigten Ausführungsform liegt das distale Ende der Hubstange 70 an einer Fläche gemäß dem zweiten Anschluss 30 an. Die Hubstange 70 wird vorliegend durch ein in der Wegmessvorrichtung 50 angeordnetes Federelement mit einer Federkraft entgegen der z-Richtung beaufschlagt, womit das dritte Adapterelement 20 stets auf die zumindest eine Steuerkurve 8 bzw. die Steuerkurven 8a und 8b gedrückt wird. Selbstverständlich sind auch andere Ausführungsformen denkbar, bei denen der Adapter 2 entweder ein entsprechendes Federelement mit Kraftwirkung entgegen der z-Richtung umfasst und/oder die Steuerkurven 8a, 8b umfassen eine Zwangsführung des dritten Adapterelements 20. Durch die offene Struktur des Adapters 2 verbessert sich die der Abfluss von flüssigen Medien.

Eine Steuervorrichtung 68 erzeugt ein Steuersignal S, welches zur Steuerung/Regelung der Drehposition der Welle 42 des Schwenkantriebs 40 verwendet wird. Entsprechend der Position der Hubstange 70 erzeugt die Wegmessvorrichtung 50 ein korrespondierendes Messsignal M, welches im Sinne einer Rückmeldung der Steuervorrichtung 68 zugeführt wird. Die Steuervorrichtung 68 umfasst beispielsweise Steuerfunktionen und/oder Regelfunktionen, um in Abhängigkeit von dem Messsignal M das Steuersignal S zu erzeugen.

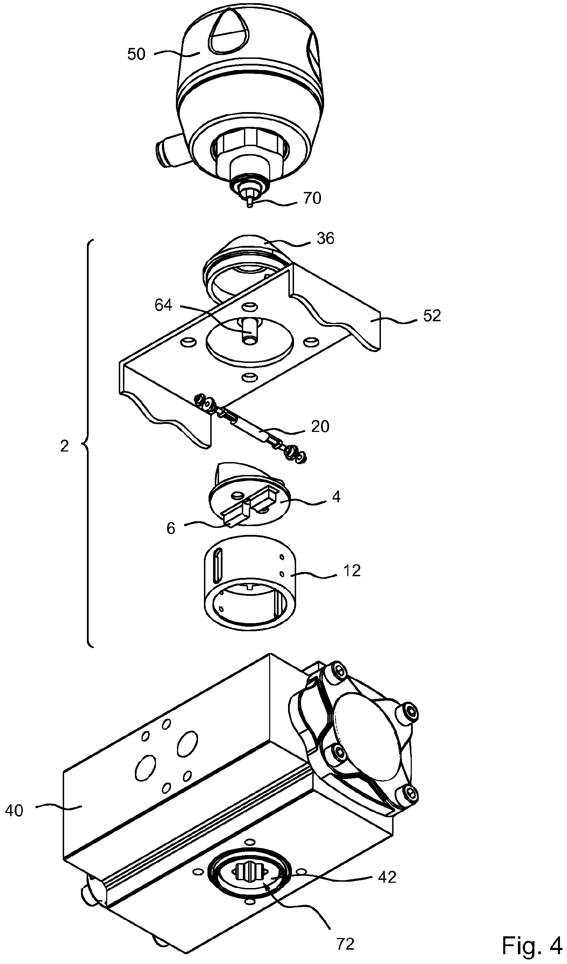

Figur 4 zeigt den Schwenkantrieb 40, den Adapter 2 und die Wegmessvorrichtung 50 in einer weiteren Explosionsansicht. Entgegen der z-Richtung weist die Welle 42 einen Anschluss 72 zur Verbindung mit dem im Fluid-Kanal angeordneten Absperrkörper auf. Der Absperrkörper der Armatur ist beispielsweise ein Kugelhahn oder eine Absperrklappe.

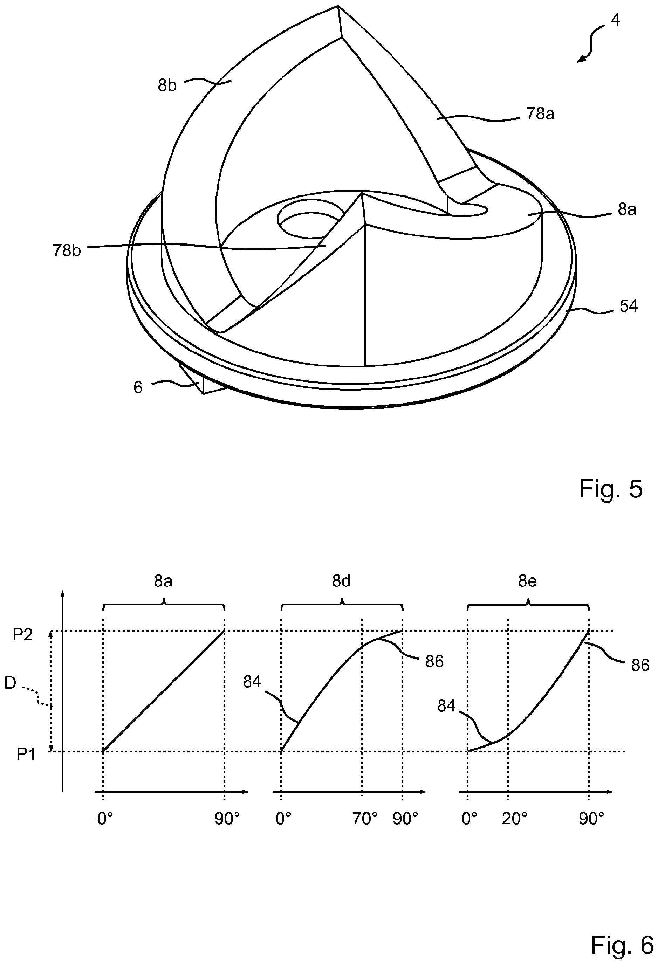

Figur 5 zeigt das erste Adapterelement 4 in perspektivische Ansicht. Das erste Adapterelement 4 umfasst in Umfangsrichtung den Anlageabschnitt 54, welcher im Wesentlichen als Zylindermantelfläche ausgebildet ist. Die Steuerkurven 8a und 8b sind im Wesentlichen rotationssymmetrisch zur Rotationsachse 10 und bilden damit für das steg-förmige dritte Adapterelement 20 Gleitbereiche. Zwischen den Steuerkurven 8a und 8b befinden sich Rampen 78a und 78b, welche von dem dritten Adapterelement nur dann überlaufen bzw. überfahren werden, wenn es zu einer Überdrehung des durch die jeweilige Steuerkurve 8a, 8b vorgegebenen Winkelbereichs kommt.

Figur 6 zeigt verschiedene Ausführungsformen einer Steuerkurve in schematischer Ansicht. Die Steuerkurve 8a umfasst beispielsweise einen Winkelbereich von 90°, wobei 0° einer geschlossenen Position und 90° einer geöffneten Position entspricht. Die Steuerkurve 8a weist an jeder Stelle die gleiche Steigung auf.

Die Steuerkurve 8d umfasst zwei Steuerabschnitte 84 und 86, wobei der hin zur Schließposition des Absperrkörpers der Armatur angeordnete Steuerabschnitt 86 eine kleinere Steigung aufweist als der Steuerabschnitt 84. Damit wird durch den Steuerabschnitt 86 eine erhöhte Auflösung des Messsignals der Wegmessvorrichtung in Richtung der Schließposition erreicht, was insbesondere für Regelanwendungen vorteilhaft ist.

Die Steuerkurve 8e umfasst die zwei Steuerabschnitte 84 und 86, wobei der hin zur Öffnungsposition des Absperrkörpers der Armatur angeordnete Steuerabschnitt 84 eine kleinere Steigung aufweist als der Steuerabschnitt 86. Damit wird eine erhöhte Auflösung des Messsignals der Wegmessvorrichtung erreicht, was insbesondere für Regelanwendungen vorteilhaft ist.

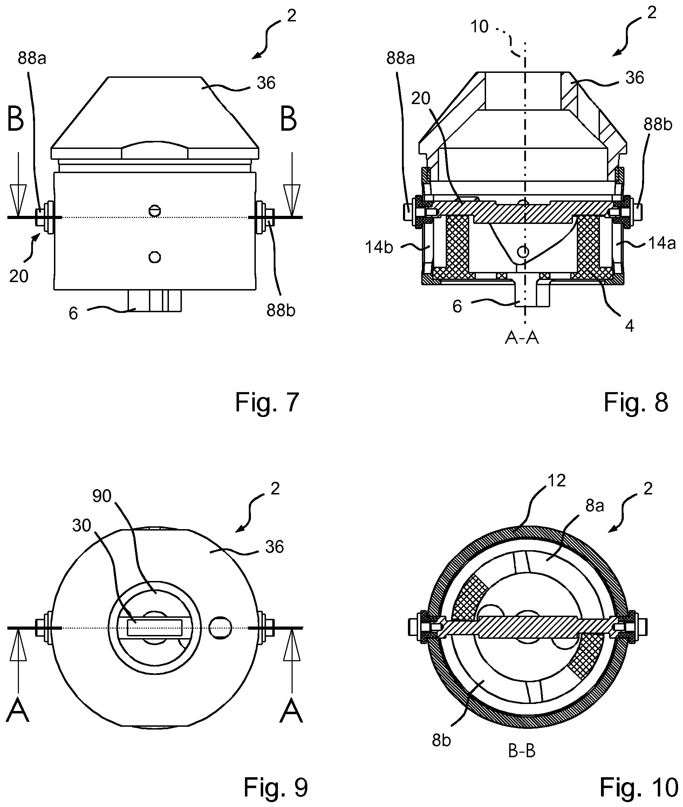

Figur 7 zeigt eine weitere schematische Seitenansicht des Adapters 2. Die distalen Enden 88a und 88b des dritten Adapterelements 20 sind nach außen geführt und stellen damit einen distalen Anzeigeabschnitt dar, welcher von außerhalb des Adapters 2 einsehbar ist.

Figur 8 zeigt einen schematischen Schnitt A-A des Adapters 2. Die distalen Enden 88a und 88b sind als separate Elemente ausgeführt und können beispielsweise eingefärbt sein, um die Position des Schwenkantriebs und des daran angeordneten Absperrkörpers anzuzeigen. Vorliegend ist der Absperrkörper in der den Fluid-Kanal öffnenden Position und das dritte Adapterelement 20 ist in eine in z-Richtung orientierte Position verlagert.

Figur 9 zeigt eine schematische Draufsicht auf den Adapter 2. Der Deckel 36 umfasst eine zentrale Öffnung 90, durch welche der zweite Anschluss 30 zugänglich ist.

Figur 10 zeigt einen schematischen Schnitt B-B des Adapters 2.

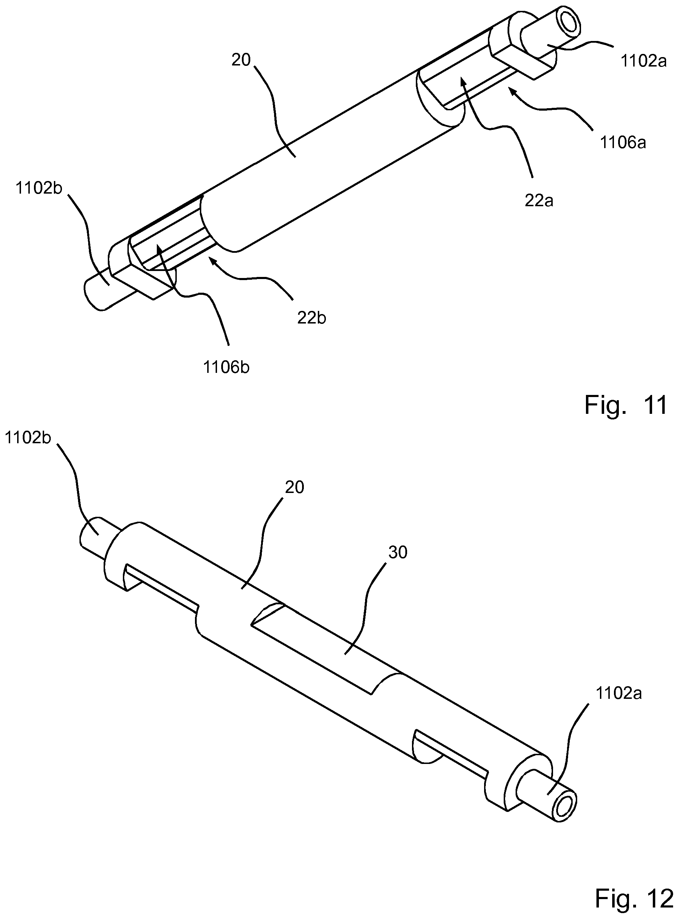

Figur 11 zeigt eine perspektivische Ansicht des dritten Adapterelements 20. Distale Abschnitte 1102a und 1102b sind zum Eingriff in den jeweiligen Führungsabschnitt 14a und 14b vorgesehen. Des Weiteren sind die als Gleitflächen ausgebildeten Kontaktabschnitte 22a und 22b zum Gleiten auf der jeweils zugeordneten Steuerkurve vorgesehen, wobei die Gleitflächen der Kontaktabschnitte 22a und 22b größer sind als eine jeweilige zugeordnete gegenüberliegende Fläche 1106a und 1106b.

Figur 12 zeigt eine perspektivische Ansicht des dritten Adapterelements 20. Der Anschluss 30 ist vorliegend als Anlagefläche für das distale Ende der Hubstange der Wegmessvorrichtung ausgebildet.

## Patentansprüche

1. Ein Adapter (2) zur Anordnung einer Wegmessvorrichtung an einem Schwenkantrieb einer Armatur umfassend:
- ein um eine Rotationsachse (10) drehbares erstes Adapterelement (4) mit einem ersten Anschluss (6) für eine Welle des Schwenkantriebs und mit einer Steuerkurve (8), welche zwei in voneinander beabstandeten Lotebenen (x1-y1, x2-y2) der Rotationsachse (10) liegende gedachte Punkte (P1, P2) miteinander verbindet;
- ein feststehendes zweites Adapterelement (12) mit einem Führungsabschnitt (14) für ein drittes Adapterelement (20); und
- das drittes Adapterelement (20) mit einem Kontaktabschnitt (22), welcher die Steuerkurve (8) kontaktiert, mit einem weiteren Führungsabschnitt (16), welcher gemeinsam mit dem Führungsabschnitt (14) des zweiten Adapterelements (12) eine Bewegung des dritten Adapterelements (20) auf eine Bewegung entlang der Rotationsachse (10) beschränkt, und mit einem zweiten Anschluss (30) für eine Hubstange der Wegmessvorrichtung.

2. Der Adapter (2) nach dem Anspruch 1, wobei das dritte Adapterelement (20) zumindest einen distalen Anzeigeabschnitt aufweist, welcher von außerhalb des Adapters (2) einsehbar ist.

3. Der Adapter (2) nach Anspruch 1 oder 2, wobei der erste Anschluss (6), die Führungsabschnitte (14, 16) und die Steuerkurve (8) derart aufeinander abgestimmt sind, sodass das dritte Adapterelement (20) in einer geöffneten Position der Armatur in einer von dem Schwenkantrieb weg orientierten Position angeordnet ist und sodass das dritte Adapterelement (20) in einer geschlossenen Position der Armatur in einer zum Antrieb hin orientierten Position angeordnet ist.

4. Der Adapter (2) nach Anspruch 1 oder 2, wobei der erste Anschluss (6), die Führungsabschnitte (14, 16) und die Steuerkurve (8) derart aufeinander abgestimmt sind, sodass das dritte Adapterelement (20) in einer geschlossenen Position der Armatur in einer von dem Schwenkantrieb weg orientierten Position angeordnet ist und sodass das dritte Adapterelement (20) in einer geöffneten Position der Armatur in einer zum Antrieb hin orientierten Position angeordnet ist.

5. Der Adapter (2) nach einem der vorstehenden Ansprüche, wobei die Steuerkurve (8) einer gedachten Kurve durch eine Mantelfläche eines Kreiszylinders folgt, wobei eine Rotationsachse des Kreiszylinders mit der Rotationsachse (10) des ersten Adapterelements (4) zusammenfällt.

6. Der Adapter (2) nach einem der vorstehenden Ansprüche, wobei das erste Adapterelement (4) zwei Steuerkurven (8a, 8b) umfasst, welche eine Rotationssymmetrie zu der Rotationsachse (10) aufweisen, und wobei das dritte Adapterelement (20) zwei zu den Steuerkurven (8a, 8b) korrespondierende Kontaktabschnitte (22a, 22b) umfasst, welche jeweils eine der Steuerkurven (8a, 8b) kontaktieren.

7. Der Adapter (2) nach einem der vorstehenden Ansprüche, wobei die Steuerkurve (8; 8a; 8b) eine über einen Winkelbereich von einer geschlossenen Position hin zu einer geöffneten Position der Armatur gleichbleibende Steigung aufweist.

8. Der Adapter (2) nach einem der Ansprüche 1 bis 6, wobei die Steuerkurve (8d; 8e) zumindest zwei Steuerabschnitte (84, 86) mit unterschiedlicher Steigung umfasst.

9. Der Adapter (2) nach dem Anspruch 8, wobei die Steuerkurve (8d) hin zu einer Schließposition der Armatur den zweiten Steuerabschnitt (86) mit einer Steigung aufweist, welche geringer ist als in dem ersten Steuerabschnitt 84).

10. Eine Armatur umfassend den Adapter (2) nach einem der vorstehenden Ansprüche, einen Schwenkantrieb (40) und eine Wegmessvorrichtung (50), wobei der Adapter (2) zwischen der Welle (42) des Schwenkantriebs (40) und der Hubstange (70) der Wegmessvorrichtung (50) angeordnet ist.

## Claims

1. Adapter (2) for arranging a displacement measuring device on a pivot drive of a fitting, comprising:
- a first adapter element (4) which is rotatable about an axis of rotation (10) and has a first connection (6) for a shaft of the pivot drive, and a control cam (8) which interconnects two theoretical points (P1, P2) which are located in mutually spaced vertical planes (x1-y1, x2-y2) of the axis of rotation (10);
- a stationary second adapter element (12) having a guide portion (14) for a third adapter element (20); and
- the third adapter element (20) having a contact portion (22) which contacts the control cam (8), having a further guide portion (16), which, together with the guide portion (14) of the second adapter element (12), limits a movement of the third adapter element (20) to a movement along the axis of rotation (10), and having a second connection (30) for a lifting rod of the displacement measuring device.

2. Adapter (2) according to claim 1, wherein the third adapter element (20) has at least one distal indicator portion which is visible from outside the adapter (2).

3. Adapter (2) according to claim 1 or claim 2, wherein the first connection (6), the guide portions (14, 16) and the control cam (8) are coordinated such that, when the fitting is in an open position, the third adapter element (20) is arranged in a position which is oriented away from the pivot drive, and such that, when the fitting is in a closed position, the third adapter element (20) is arranged in a position which is oriented toward the drive.

4. Adapter (2) according to claim 1 or claim 2, wherein the first connection (6), the guide portion (14, 16) and the control cam (8) are coordinated such that, when the fitting is in a closed position, the third adapter element (20) is arranged in a position which is oriented away from the pivot drive, and such that, when the fitting is in an open position, the third adapter element (20) is arranged in a position which is oriented toward the drive.

5. Adapter (2) according to any of the preceding claims, wherein the control cam (8) follows a theoretical curve through a lateral surface of a circular cylinder, wherein an axis of rotation of the circular cylinder coincides with the axis of rotation (10) of the first adapter element (4).

6. Adapter (2) according to any of the preceding claims, wherein the first adapter element (4) comprises two control cams (8a, 8b) which have a rotational symmetry relative to the axis of rotation (10), and wherein the third adapter element (20) has two contact portions (22a, 22b) which correspond to the control cams (8a, 8b), and which each contact one of the control cams (8a, 8b).

7. Adapter (2) according to any of the preceding claims, wherein the control cam (8; 8a; 8b) has a gradient which remains consistent over an angular range from a closed position to an open position of the fitting.

8. Adapter (2) according to any of claims 1 to 6, wherein the control cam (8d; 8e) comprises at least two control portions (84, 86) which have different gradients.

9. Adapter (2) according to claim 8, wherein, toward a closed position of the fitting, the control cam (8d) has the second control portion (86) which has a gradient which is smaller than that in the first control portion (84) .

10. Fitting comprising the adapter (2) according to any of the preceding claims, a pivot drive (40) and a displacement measuring device (50), wherein the adapter (2) is arranged between the shaft (42) of the pivot drive (40) and the lifting rod (70) of the displacement measuring device (50).

## Revendications

1. Adaptateur (2) pour agencer un dispositif de mesure de déplacement sur un entraînement pivotant d'un raccord comprenant:
- un premier élément d'adaptateur (4) rotatif autour d'un axe de rotation (10) ayant une première connexion (6) pour un arbre de l'entraînement pivotant et ayant une came de commande (8), qui relie l'un à l'autre des points imaginaires (P1, P2) situés dans deux plans verticaux espacés (x1-y1, x2-y2) de l'axe de rotation (10);
- un deuxième élément d'adaptateur fixe (12) comportant une section de guidage (14) pour un troisième élément d'adaptateur (20); et
- le troisième élément d'adaptateur (20) ayant une section de contact (22) qui vient en contact avec la came de commande (8), avec une section de guidage (16) supplémentaire qui, conjointement avec la section de guidage (14) du deuxième élément d'adaptateur (12), limite un déplacement du troisième élément d'adaptateur (16) 20) à un déplacement le long de l'axe de rotation (10), et ayant une seconde connexion (30) pour une tige de levage du dispositif de mesure de distance.

2. Adaptateur (2) selon la revendication 1, dans lequel le troisième élément d'adaptateur (20) présente au moins une section d'affichage distale, qui est visible depuis l'extérieur de l'adaptateur (2).

3. Adaptateur (2) selon la revendication 1 ou 2, dans lequel la première connexion (6), les sections de guidage (14, 16) et la came de commande (8) sont adaptés les unes aux autres, de sorte que le troisième élément d'adaptateur (20), dans une position ouverte du raccord, est agencé dans une position orientée à l'opposé de l'entraînement pivotant, et de sorte que le troisième élément d'adaptateur (20), dans une position fermée du raccord, est agencé dans une position orientée vers l''entraînement.

4. Adaptateur (2) selon la revendication 1 ou 2, dans lequel la première connexion (6), les sections de guidage (14, 16) et la came de commande (8) sont adaptées les uns aux autres, de sorte que le troisième élément d'adaptateur (20), dans une position fermée du raccord, est agencée dans une position orientée à l'opposé de l'entraînement pivotant et de sorte que le troisième élément d'adaptateur (20), dans une position ouverte du raccord, est agencé dans une direction orientée vers l'entraînement.

5. Adaptateur (2) selon l'une quelconque des revendications précédentes, dans lequel la came de commande (8) suit une courbe imaginaire à travers une surface extérieure d'un cylindre circulaire, dans lequel un axe de rotation du cylindre circulaire coïncide avec l'axe de rotation (10) du premier élément d'adaptateur (4).

6. Adaptateur (2) selon l'une quelconque des revendications précédentes, dans lequel le premier élément d'adaptateur (4) comprend deux cames de commande (8a, 8b), qui présentent une symétrie de rotation par rapport à l'axe de rotation (10), et dans lequel le troisième élément d'adaptateur (20) comprend deux sections de contact (22a, 22b) correspondant aux cames de commande (8a, 8b), qui sont chacune en contact avec l'une des cames de commande (8a, 8b).

7. Adaptateur (2) selon l'une quelconque des revendications précédentes, dans lequel la came de commande (8; 8a ; 8b) présente une pente sur une plage angulaire allant d'une position fermée jusqu'à une position ouverte du raccord.

8. Adaptateur (2) selon l'une quelconque des revendications 1 à 6, dans lequel la came de commande (8d ; 8e) comprend au moins deux sections de commande (84, 86) avec une pente différente.

9. Adaptateur (2) selon la revendication 8, dans lequel la came de commande (8d) de la seconde section de commande (86) présente une pente vers une position de fermeture du raccord, qui est inférieure à celle de la première section de commande 84).

10. Raccord comprenant l'adaptateur (2) selon l'une quelconque des revendications précédentes, un entraînement pivotant (40) et un dispositif de mesure de déplacement (50), dans lequel l'adaptateur (2) est agencé entre l'arbre (42) de l'entraînement pivotant (40) et la tige de levage (70) du dispositif de mesure de déplacement (50).
